**Europäisches Patentamt**

**European Patent Office**

**Office européen des brevets**

(11) Veröffentlichungsnummer: **0 148 386 B1**

(12) **EUROPÄISCHE PATENTSCHRIFT**

(45) Veröffentlichungstag der Patentschrift:
13.05.87

(51) Int. Cl.⁴: **C 09 J 3/14**, C 08 J 5/12, C 08 J 7/12

(21) Anmeldenummer: 84114253.2

(22) Anmeldetag: 26.11.84

(54) **Verfahren zur Verbesserung der Haftung von Klebstoffschichten, die aus wässriger Dispersion auf Polyolefinoberflächen aufgebracht werden.**

(30) Priorität: 03.12.83 DE 3343779

(43) Veröffentlichungstag der Anmeldung:
17.07.85 Patentblatt 85/29

(45) Bekanntmachung des Hinweises auf die Patenterteilung:
13.05.87 Patentblatt 87/20

(84) Benannte Vertragsstaaten:
AT BE CH DE FR GB IT LI NL SE

(56) Entgegenhaltungen:
CHEMICAL ABSTRACTS, Band 87, 1977, Seite 34, Nr. 85737q, Columbus, Ohio, US; & JP - A - 76 50937 (YOKOHAMA RUBBER CO., LTD.) 06.05.1976
CHEMICAL ABSTRACTS, Band 90, 1979, Seite 44, Nr. 73026f, Columbus, Ohio, US; & JP - A - 78 123 441 (HITACHI CABLE, LTD.) 27.10.1978

(73) Patentinhaber: **BASF Aktiengesellschaft, Carl-Bosch-Strasse 38, D-6700 Ludwigshafen (DE)**

(72) Erfinder: **Aydin, Oral, Dr.-Chem., Sophienstrasse 14, D-6800 Mannheim (DE)**
Erfinder: **Kast, Hans, Dr.-Chem., Kantstrasse 1, D-6800 Mannheim (DE)**
Erfinder: **Fricke, Hans-Joachim, Dipl.-Ing., Am Herrgottsacker 2a, D-6716 Dirmstein (DE)**

## Beschreibung

Diese Erfindung betrifft die Verbesserung der Haftung von Klebstoffschichten, die aus einer wässrigen Dispersion aufgebracht werden, auf Polyolefinoberflächen, die mit gleichartigen oder anderen Substraten verklebt werden sollen.

Bei der Verklebung von Folien verschiedener Art arbeitet man in der Praxis im allgemeinen unter Einsatz von Klebstoffen, die in organischen Lösungsmitteln gelöst sind. Nachteilig sind hierbei die verhältnismässig hohen Lösungsmittelkosten, die Abluftreinigung, eine eventuelle Nachverbrennung geringer Lösungsmittelreste und/oder die Emission von Lösungsmitteln. Man hat daher schon versucht, lösungsmittelfrei zu arbeiten und dabei gemäss den Angaben der DE-OS 2 549 227 Urethane mit Isocyanat-Endgruppen eingesetzt, die bei etwa 100°C verarbeitet sind und unter dem Einfluss der Luftfeuchtigkeit unter Härten verkleben. Nachteilig hierbei ist jedoch die viel zu geringe Stabilität des Reaktivsystems sowie die ungenügende Anfangshaftung der Kaschierungen.

Aus der DE-OS 3 130 430 sind zudem lösungsmittelfreie Klebstoffe für das Verkleben von Folien bekannt, die unter der Einwirkung energiereicher Strahlen, z.B. von UV-Strahlen oder Elektronenstrahlen härten. Dabei handelt es sich um Zwei-Komponenten-Systeme, die (A) mindestens ein Polyisocyanat und (B) mindestens eine (Meth)acryloyl-Gruppe sowie Hydroxylgruppen aufweisende Verbindung enthalten. Derartige Systeme zeigen in der Praxis jedoch geringe Anfangshaftung unmittelbar nach dem Kaschiervorgang sowie schwer kontrollierbares Verhalten bei der Verarbeitung.

«Schliesslich ist es aus Chemical Abstracts Vol. 90, S. 44, Nr. 73 026f bekannt, dass man Kupferoberflächen mit Polyethylen verkleben kann, indem man ein lösungsmittelfreies Klebstoffgemisch aus carboxyliertem Polyethylen und einem gesättigten Polyesterharz als Klebstoff verwendet, das 0,05 bis 0,5% seines Gewichts an Isophthalsäure-Dihydrazid-Verbindungen als Komplexbildungsmittel enthält.»

Allgemein tritt bei Polyolefinen dadurch eine besondere Schwierigkeit auf, dass Klebstoffe an ihrer Oberfläche im Vergleich zu Oberflächen aus anderen Stoffen besonders wenig haften, und dies gilt sowohl für geblasene Hohlkörper als auch für Folien als auch für Spritzgussartikel. Man hat daher schon versucht, die Haftung an Polyolefinoberflächen durch deren Behandlung mit Heissluft, Beflammen, UV-Bestrahlung, Behandeln mit Ozon oder Chlor, Oxidation mit Salpetersäure oder Chromschwefelsäure sowie insbesondere durch Corona-Entladung zu verbessern oder Primer, wie Silanverbindungen, Titansäureester, Polyethylenimine oder spezielle Melamin-Formaldehyd-Kondensate zur Haftungsverbesserung einzusetzen.

Die derzeit technisch bedeutsamste Methode ist die Corona-Entladung, die besonders einfach und technisch besonders wenig aufwendig ist. Ein Nachteil dieser Methode ist jedoch der verhältnismässig rasche Abfall der Wirksamkeit nach der Behandlung und der nachteilige Einfluss von Verarbeitungshilfsstoffen, z.B. Gleitmitteln, die den Effekt der Corona-Behandlung vermindern. Wenngleich mit einer Corona-Vorbehandlung von Olefinoberflächen eine deutliche Haftungsverbesserung erzielt werden kann, die sich z.B. bei der Beschichtung mit Klebstofflösungen in organischen Lösungsmitteln oder beim Bedrucken der Oberflächen stark auswirken, reicht die Haftungsverbesserung nicht aus, eine ausreichende Haftung von Klebstoff-Filmen, die aus wässriger Dispersion aufgebracht werden, zu erzielen.

Der vorliegenden Erfindung liegt daher die Aufgabe zugrunde, polyolefinische Oberflächen mit Klebstoffen aus wässriger Dispersion derart zu versehen, dass deren Haftung für den praktischen Bedarf befriedigt.

Es wurde gefunden, dass man die Haftung von Klebstoff-Schichten, die aus wässriger Dispersion auf Polyolefinoberflächen aufgebracht werden, dadurch stark verbessern kann, dass man auf die durch Corona-Entladung in an sich üblicher Weise vorbehandelten Polyolefinoberflächen 2 bis 10 C-Atome enthaltende Dicarbonsäuredihydrazide und eine wässrige Dispersion eines Klebstoffpolymerisats, vorzugsweise als Gemisch, aufbringt. Als Dihydrazide kommen dabei vor allem Oxalsäuredihydrazid, Malonsäuredihydrazid, Bernsteinsäuredihydrazid, Glutarsäuredihydrazid, Adipinsäuredihydrazid, Sebazinsäuredihydrazid, Maleinsäuredihydrazid, Fumarsäuredihydrazid, Itaconsäuredihydrazid und/oder Isophthalsäuredihydrazid in Betracht. Von besonderem Interesse sind: Adipinsäuredihydrazid, Sebazinsäuredihydrazid und Isophthalsäuredihydrazid.

Die Dihydrazide der genannten Art werden vorzugsweise im Gemisch mit den wässrigen Dispersionen der Klebstoffpolymerisate auf die durch Corona-Entladung vorbehandelten Polyolefinoberflächen aufgebracht, wobei ihre Menge, bezogen auf den Polymerisatgehalt der Dispersionen 0,01 bis 4 Gew.-%, vorzugsweise 0,1 bis 2 Gew.-% beträgt. Man kann aber auch die Dihydrazide als solche, gegebenenfalls in Form ihrer Lösungen, beispielsweise in Wasser oder niederen Alkoholen, auf die durch Corona-Entladung vorbehandelten Polyolefinoberflächen aufbringen, wobei 0,001 bis 1 g, vorzugsweise 0,002 bis 0,05 g je qm Polyolefinoberfläche ausreichen. Im Falle des Aufbringens der Dihydrazide auf die Polyolefinoberfläche soll dies möglichst unmittelbar nach der Corona-Entladung erfolgen. Die auf diese Weise vorbehandelten Folien sind dann besser lagerfähig bei verbesserter Haftung als Folien, die ausschliesslich mit einer Corona-Entladung vorbehandelt sind.

Polyolefine im Sinne dieser Erfindung sind vor allem die nach dem üblichen Hoch- und Niederdruck-Polymerisationsverfahren hergestellten Polymerisate des Ethylens und Propylens, wie sie insbesondere zur Herstellung von Folien eingesetzt werden. Wässrige Dispersionen von Klebstoff-Polymerisaten sind allgemein bekannt und im Handel leicht erhältlich. Geeignet sind dabei im allgemeinen wässrige Dispersionen solcher Polymerisate, deren Glastemperaturen oft unter 50°C, vorzugsweise unter 25°C, liegen. Genannt seien vor allem die in üblicher Weise hergestellten Klebstoffdispersionen auf Basis von Acryl- und Methacrylsäureestern, die sich meist vom Acrylsäureethyl-, Butyl- und/oder 2-Ethylhexyl-ester ableiten sowie wässrige Dispersionen von Butadien-Styrol-Copolymerisaten, von Vinylesterpolymerisaten sowie von Vinylhalogeniden, insbesondere von Vinylchlorid-Copolymerisaten. Derartige Klebstoff-Copolymerisate können auch in untergeordneten Mengen als Comonomere Acrylnitril und/oder α,β-monoolefinisch ungesättigte, 3 bis 5 C-Atome enthaltende Mono- und/oder Dicarbonsäuren und/oder deren Amide sowie deren an den Amid-Stickstoff-Atomen durch Methylolgruppen substituierte Derivate oder copolymerisierbare, olefinisch ungesättigte Ketone oder Aldehyde einpolymerisiert enthalten, z.B. Acrylsäure, Methacrylsäure, Itaconsäure, Acrylsäureamid, Methacrylsäureamid, N-Methylolacrylsäureamid, N-Methylolmethacrylsäureamid und N-Butoxymethylacrylamid sowie ferner N-Methylacrylamid, Acrolein und Diacetonacrylamid. In manchen Fällen enthalten derartige Copolymerisate auch Vinylsulfonsäure oder andere olefinisch ungesättigte Säuren z.B. N(β-sulfato-ethyl)acrylamid, β-Sulfoethyl-methacrylat oder Acrylamidopropansulfonsäure einpolymerisiert. Der Anteil an derartigen Monomeren mit reaktiven Resten liegt im allgemeinen im Bereich von 0,5 bis 5, insbesondere von 1 bis 3 Gew.-%, bezogen auf die gesamten Monomeren. Geeignet sind ferner wässrige Dispersionen von Polyurethanklebstoffen. Der Polymergehalt der Dispersionen liegt meist im Bereich von 40 bis 60 Gewichtsprozent.

Beispiele für geeignete wässrige Polyacrylat-Klebstoff-Polymerisatdispersionen sind z.B. aus der britischen Patentschrift 1 259 459 und den US-PSen 3 008 850 und 2 956 904 sowie der britischen Patentschrift 1 521 716 und den EP-OSen 84 132 und 88 300 bekannt. Eine geeignete wässrige Dispersion eines Klebstoff-Copolymerisats auf Basis eines Butadien-Styrol-Copolymerisats ist z.B. in der EP-OS 50 226 beschrieben. Beispiele für geeignete wässrige Klebstoff-Copolymerisatdispersionen auf Basis von Polyvinylestern sind aus I. Skeist, Handbook of Adhesives, 2. Auflage von Nostrand Reinhold Comp., New York 1977, Seiten 464-495 und solche von Polyurethanklebstoffen aus der DE-PS 1 495 745 bekannt.

Die mit den Dicarbonsäure-Dihydraziden und den wässrigen Dispersionen von Klebstoff-Polymerisaten beschichteten Polyolefinoberflächen, z.B. Polyethylenoberflächen, können mit anderen Substraten, z.B. unbeschichteten Folien auf Basis von Polyolefinen, Polyamiden, Polyestern, Polystyrol oder Polyvinylhalogeniden, wie besonders Polyvinylchlorid, kaschiert oder auf andere flächige Substrate, z.B. aus Holz, Metallen oder Kunststoffen aufgeklebt werden. Man erzielt dabei Haftfestigkeiten, wie sie sonst nur beim Aufbringen der Klebstoff-Polymerisate aus nichtwässrigen Systemen erzielt werden können.

Die in den folgenden Beispielen angegebenen Teile und Prozente beziehen sich auf das Gewicht.

### Beispiel 1

Zu einer in üblicher Weise hergestellten 50%igen wässrigen Dispersion eines Copolymerisats aus 85 Teilen 2-Ethylhexylacrylat, 10 Teilen Acrylnitril sowie jeweils 2,5 Teilen Acrylsäure und N-Methylolmethacrylsäureamid gibt man wechselnde Mengen einer 50%igen wässrigen Dispersion von Adipinsäuredihydrazid. Die erhaltenen Gemische werden auf eine in üblicher Weise durch Corona-Entladung vorbehandelte Folie aus Polyethylen einer Stärke von 150 μm in einer Menge von 10 g/m² aufgetragen. Man trocknet bei Raumtemperatur und kaschiert mittels einer Gummiwalze jeweils eine Folie aus Polypropylen und eine Folie aus Polyamid auf. Die erhaltenen Laminate werden 3 Minuten im Trockenschrank bei 60°C getempert und dann daraus 2 cm breite Streifen geschnitten. Die daran mit einer Zugprüfmaschine bestimmten Verbundfestigkeiten sind in der folgenden Tabelle 1 zusammengestellt, in der auch die Menge an Adipinsäurehydrazid in Prozent, bezogen auf den Polymerisatgehalt der Dispersion angegeben ist. In der Tabelle ist auch ein Vergleichsversuch aufgenommen, bei dem eine wässrige Dispersion des Copolymerisats ohne Dihydrazidzusatz auf die durch Corona-Entladung vorbehandelte Polyethylenfolie aufgebracht wurde.

In der folgenden Tabelle bedeuten PE = Polyethylen, PP = Polypropylen und PA = Polyamid.

### Tabelle 1

Verbundhaftwerte in N/cm

|  | Adipinsäuredihydrazid in Gew.-% | | | | |
|---|---|---|---|---|---|
|  | ohne | 0,1 | 0,5 | 2 | 4 |
| PE/PP | 0,2 | 0,8 | 1,6 | 1,2 | 1,3 |
| PE/PA | 0,2 | 0,6 | 1,1 | 0,8 | 0,9 |

### Beispiel 2

Eine 55%ige wässrige Dispersion eines in üblicher hergestellten Copolymerisats aus 40% seines Gewichts n-Butylacrylat, 20% seines Gewichts Vinylpropionat und 40% seines Gewichts Vinylidenchlorid wird mit einer 50%igen wässrigen Suspension von Adipinsäuredihydrazid versetzt, so dass ihr Gehalt an diesem Hydrazid 1%, bezogen auf die Polymerisatmenge, beträgt. Die Dispersion wird in einer Menge von 10 g/m² auf eine mit einer Corona-Entladung in üblicher Weise vorbehandelten Folie aus Polyethylen aufgetragen. Ausserdem wird eine derartige Polyethylenfolie zunächst mit einer 1%igen wässrigen Lösung von Adipinsäuredihydrazid in einer Menge von 0,5 g des Dihydrazids je m² aufgetragen, die zur Verbesserung der Benetzung der Polyethylenfolie 0,2% ihres Gewichts des Natriumsalz des Schwefelsäurehalbesters von mit 9 mol Ethylenoxid ethoxylierten Isooctylphenol enthielt. Die auf diese Weise geprimerte Folie wurde 3 Minuten bei 60°C getrocknet und dann mit der Dihydrazid-freien Polymer-Dispersion in einer Menge von 10 g/m² beschichtet. Die beschichteten Folien werden 3 Minuten bei 60°C getrocknet.

Anschliessend werden die beschichteten Folienseiten vorsichtig mit einer Rasierklinge kreuzweise eingeschnitten (Gitterschnitt). Darauf wird ein Klebebandstreifen von 2 cm Stärke (Tesafilm) unter Abdeckung des Gitterschnitts und von etwa 10 cm der Beschichtung aufgeklebt. An der Verklebungsstelle mit dem Gitterschnitt wird der Tesafilmstreifen mit einer Zugprüfmaschine im Winkel von 180°C abgezogen. Dabei ergeben sich folgende Verbundhaftwerte in N/2 cm:

*Tabelle 2*

| ohne Zusatz | mit 1% ADH | mit ADH geprimert |
|---|---|---|
| 0,6 Ao | 4,6 A | 4,6 A |

*Beispiel 3*
a) Man arbeitet wie in Beispiel 2 angegeben, setzt aber eine in üblicher Weise hergestellte 50%ige wässrige Dispersion eines Copolymerisats aus jeweils 48% ihres Gewichts n-Butylacrylat und Styrol sowie jeweils 2% ihres Gewichts Acrylsäure und Methacrylamid ein. Erhalten werden dann folgende Verbundhaftwerte in N/2 cm:

*Tabelle 3*

| ohne Zusatz | 1% ADH | mit ADH vorbehandelt |
|---|---|---|
| 0,4 Ao | 3,3 A | 3,4 A |

Bei weiteren 2 cm breiten Proben, die keinen Kreuzschnitt aufwiesen, wurde der Tesafilm von Hand abgezogen und die Haftung auf der Polyethylenfolie empirisch benotet. Dabei wurde folgende Benotung vorgenommen:

1 = sehr gute Haftung
2 = gute Haftung
3 = mittlere Haftung
4 = mittlere bis schlechte Haftung
5 = keine Haftung.

Damit ergaben sich folgende Benotungen:

*Tabelle 4*

| ohne Zusatz | 1% ADH | mit ADH vorbehandelt |
|---|---|---|
| 5 | 3 | 1-2 |

b) Die empirische Benotung von Haftfestigkeiten von Tesafilmen auf Polyethylenfolien, die mit Dispersion und Dihydrazid gemäss a) beschichtet sind, wurde mit den gleichen Mengen folgender Dihydrazide wiederholt (b 1) Bernsteinsäuredihydrazid und (b 2) Isophthalsäuredihydrazid. Die damit erhaltenen Benotungen sind in der folgenden Tabelle 5 zusam-mengestellt:

*Tabelle 5*

| | ohne Zusatz | 1% Dihydrazid | mit Dihydrazid vorbehandelt |
|---|---|---|---|
| b 1 | 5 | 3 | 3 |
| b 2 | 5 | 3 | 2-3 |

*Beispiel 4*
Beispiel 2 wurde wiederholt, dabei jedoch eine in üblicher Weise hergestellte wässrige Dispersion eines Copolymerisats aus 30% seines Gewichts Butadien 66% seines Gewichts Styrol, 1% seines Gewichts Methacrylamid und 3% seines Gewichts Acrylsäure eingesetzt. Die damit erhaltenen Verbundhaftwerte in N/2 cm sind in der folgenden Tabel-le 6 zusammengestellt:

*Tabelle 6*

| ohne Zusatz | 1% ADH | mit ADH vorbehandelt |
|---|---|---|
| 1,2 Ao | 3,0 A | 3,1 A |

Bei allen Versuchen bedeutet:

Ao = Beschichtung wird auf Tesafilm übertragen
A = Beschichtung bleibt auf der PE-Folie

**Patentanspruch**

Verfahren zur Verbesserung der Haftung von Klebstoffschichten, die aus wässriger Dispersion auf Polyolefinoberflächen aufgebracht werden, dadurch gekennzeichnet, dass man auf die durch Corona-Entladung vorbehandelten Polyolefinoberflächen 2 bis 10 C-Atome enthaltende Dicarbonsäuredihydrazide und eine wässrige Dispersion eines Klebstoff-Polymerisats vorzugsweise als Gemisch auf-bringt.

**Claim**

A process for improving the adhesion of a layer of adhesive which is applied to a polyolefin surface from aqueous dispersion, wherein a dicarboxylic acid dihydrazide of 2 to 10 carbon atoms and an aqueous dispersion of an adhesive polymer are applied, preferably as a mixture, to the polyolefin surface which has been pretreated by corona dis-charge.

**Revendication**

Procédé pour améliorer l'adhérence de couches d'adhésifs, appliquées en dispersion aqueuse sur des surfaces polyoléfiniques, caractérisé en ce que l'on applique sur les surfaces polyoléfiniques, préalablement traitées par décharge couronne, des dihydrazi-des d'acides dicarboxyliques en $C_2$ à $C_{10}$ et une dis-persion aqueuse d'un adhésif polymère, de préférence sous forme d'un mélange.